# EUROPEAN PATENT SPECIFICATION

(11) **EP 0 427 381 B1**
(45) Date of publication and mention of the grant of the patent: **18.10.1995**
(21) Application number: 90309386.2
(22) Date of filing: 28.08.1990
(51) Int. Cl.: B29C 47/04, B29C 47/02, B60R 13/06

(54) **Integral hybrid moulding and weatherstrip**
Einteiliges Gussstück aus mehreren Bestandteilen und Dichtungsstreifen
Moulure hybride en une pièce et bande d'étanchéité

(30) Priority: 03.11.1989 US 431295
(43) Date of publication of application: 15.05.1991
(73) Proprietor: THE STANDARD PRODUCTS COMPANY, Cleveland Ohio 44102 (US)
(72) Inventor: Keys, James Frederick, West Bloomfield, Michigan 48013 (US)
(74) Representative: Jones, Michael Raymond

(56) References cited:
- EP-A- 0 372 745
- FR-A- 2 292 100
- FR-A- 2 427 526
- FR-A- 2 492 939
- US-A- 4 697 327

## Description

This invention relates to mouldings and weatherstrips for attachment to a vehicle. More particularly, the present invention relates to an integral hybrid moulding and weatherstrip which can be in-line coextruded.

Weatherstrips are well known for use with automotive vehicles and are typically made of thermoset synthetic elastomeric materials because of the desirable physical properties of such materials. All parts of the weatherstrip are taught to be formed from the same kind of rubber, such as EPDM (ethylene propylene diene monomer) or SBR (styrene butadiene rubber). Mouldings are also well known for use with automotive vehicles and are typically made of a thermoplastic material such as PVC (polyvinyl chloride). However, a problem results when attempting to form an integral hybrid moulding and weatherstrip owing to poor bonding or lack thereof between PVC and rubber materials. In order to form an integral hybrid moulding and weatherstrip, it has been known to pre-extrude the PVC moulding, pre-extrude the rubber weatherstrip, and adhesively bond the two extrusions together at the end of the process. However, this process results in considerable time expenditures, cost expenditures and material handling problems.

Moreover, FR-A-2492939 discloses a U-shaped core which is surrounded by a layer which defines several inwardly projecting flanges for accepting and gripping an edge of a separate member. A cylindrical bumper is affixed to an outer surface of the surrounding layer.

Furthermore, FR-A-2292100 discloses
- an hybrid moulding and weatherstrip for attachment to a vehicle comprising a core member, a first layer secured directly to the core member, a second layer secured directly to the core member,
- the first layer consisting essentially of a thermoplastic material,
- the second layer consisting essentially of a thermoset material, and
- the layers being extruded sequentially onto the core member.

According to one aspect of the present invention, there is provided an integral hybrid moulding and weatherstrip for attachment to a vehicle, comprising:
a core member;
a first layer secured directly to the core member;
and
a second layer secured directly to the core member;
wherein the first layer consists essentially of a thermoplastic material and the second layer consists essentially of a thermoset material, the layers being extruded sequentially onto the core member;
characterised in that there is provided adhesive means for affixing the first and second layers together; and
in that one of the layers has a groove along an interface therebetween, and the other of the layers has a projection extending into the groove for enhanced adhesion between the layers at the interface.

A further aspect of the present invention provides a method of making an integral hybrid moulding and weatherstrip for attachment to a vehicle, using an apparatus including a core unwinder, a first extruder, a second extruder, and a section puller, the core unwinder, first and second extruders and section puller being in line, the method comprising the steps of:
forming a core member to a predetermined configuration by unwinding material for the core member from a core unwinder;
extruding a first layer of a material around part of the core member with a first extruder and simultaneously forming a projection extending from the first layer at an edge thereof;
applying an adhesive to the first layer;
extruding a second layer of a material around another part of the core member with a second extruder and simultaneously forming a groove in the second layer which accepts the projection of the first layer for enhanced adhesion between the layers at an interface therebetween; and
joining the first and second layers together, with the layers being extruded in-line, wherein one of the layers is formed of a thermoset material and the other of the layers is formed of a thermoplastic material.

The present invention makes it possible to provide an integral hybrid moulding and weatherstrip, by sequential extruding in-line a thermoplastic material and thermosetting material.

Compared with the prior art, the present invention provides a method which is less time consuming and costly, and decreases the amount of material handling.

As can be appreciated, one advantage of the present invention is that it allows a thermoplastic material and a thermosetting material to be extruded in-line to form an integral hybrid moulding and weatherstrip. Another advantage of the present invention is that the in-line sequential extruding technique results in less material handling, and reduced cost and time expenditure since the integral hybrid moulding and weather strip can be formed in one run.

For a better understanding of the present invention, and to show how the same may be carried into effect, reference will now be made, by way of example, to the accompanying drawings, in which:
Figure 1 is an elevational view of a vehicle (shown broken away), to which is attached a preferred embodiment of an integral moulding and weatherstrip of the present invention;
Figure 2 is a sectional view taken along line 2-2 of Figure 1;
Figure 3 is a view similar to Figure 2 prior to forming the integral moulding and weatherstrip to the configuration of Figure 2; and
Figure 4 is a schematic view of an apparatus for forming the integral moulding and weatherstrip of Figure 3.

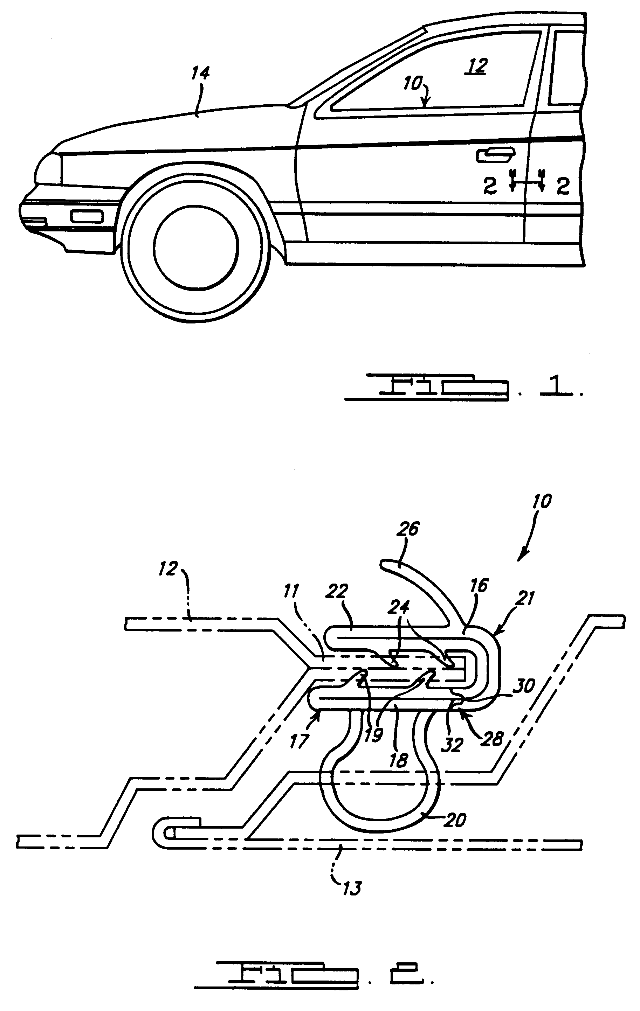

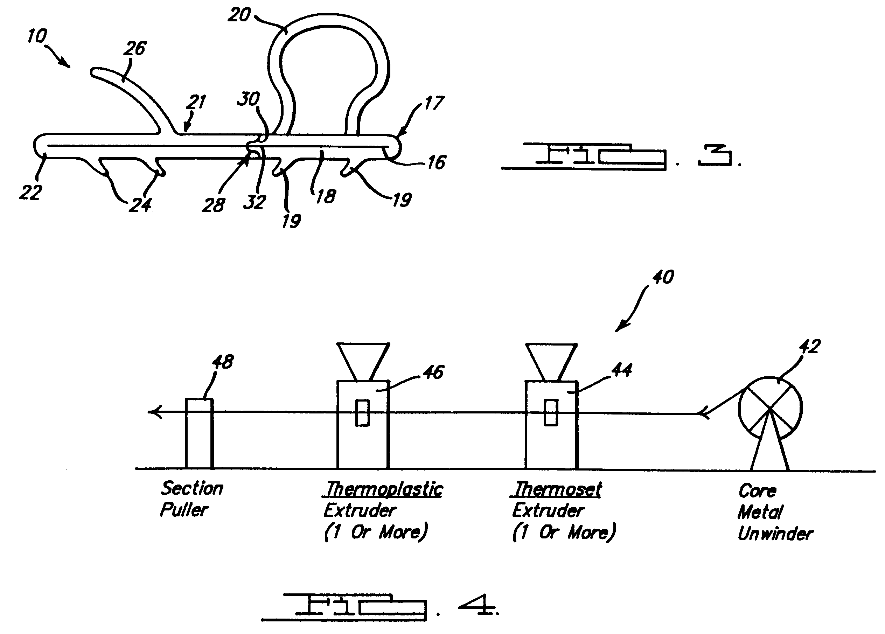

A preferred embodiment of an integral hybrid moulding and weatherstrip in accordance with the present invention, for attachment to a vehicle, is generally shown at 10 in Figures 1 and 2. The integral hybrid moulding and weatherstrip 10 is typically a door seal along a flange 11 of a door opening 12 to engage the edge of a door 13 of a vehicle 14. It should be appreciated that the integral moulding and weatherstrip 10 may be used as a typical belt weatherstrip or glass run channel.

Referring to Figures 2 and 3, the integral hybrid moulding and weatherstrip 10 includes a core member 16 which may be formed to a generally flat or planar configuration and later formed or bent to a generally U-shaped configuration for engaging the flange 11 of the door opening 12. The core member 16 is preferably made of a metal material and may be solid, perforated, lanced and stretched, wire or laminate, and flexible as is known in the art.

The integral hybrid moulding and weatherstrip 10 includes a first layer, generally indicated at 17, secured along one side of the core member 16. The first layer 17 is made of a thermoset material, which is preferably an elastomeric material such as EPDM or SBR rubber. The first layer 17 has a base portion 18 of a dense type material with a pair of spaced flanges 19 along one side for engaging or contacting the flange 11 of the door opening 12. The first layer 17 has a generally tubular portion 20 of a sponge type material along the other side for engaging an contacting the door 13.

The integral hybrid moulding and weatherstrip 10 includes a second layer, generally indicated at 21, which abuts one edge of the first layer 17 and which is secured along another side or portion of the core member 16. The second layer 21 is made of a thermoplastic plastics material such as polyvinyl chloride (PVC). The second layer 21 has a base portion 22 with a pair of spaced flanges 24 along one side for engaging the flange 11 of the door opening 12. The base portion 22 also has an outwardly extending generally arcuate flap 26 along the other side.

The first and second layers 17 and 21, respectively, are coextruded in-line around the core member 16 joining at joint 28. The second layer 21 may have a groove 30 extending longitudinally along one edge at the joint 28. The first layer 17 may have a corresponding projection or tongue 32 extending longitudinally along an edge adjacent to the grooved edge of the second layer 21 at joint 28. The projection 32 is disposed in the groove 30 and secured together by means such as a chemical adhesive. It should be appreciated that the first layer 17 may be joined to the second layer 21 by any suitable means such as a mechanical overlap or adhesion promoter. It should also be appreciated that the second layer 21 could have the projection 32 and the first layer 17 have the groove 30. It should further be appreciated that the first layer 17 may be formed along both sides of the core member 16 with a void therebetween and the second layer 21 having a base portion 22 with only flap 26 subsequently filling the void. As a result, the spaced flanges 19 and 24 would be made of the same thermoset material as the first layer 17.

A method is provided for making an integral hybrid moulding and weatherstrip 10 for attachment to the vehicle 14. Referring to Figure 4, an apparatus 40 for performing the method is shown. The apparatus 40 includes a core unwinder 42, at least one first or thermoset extruder 44 (for extruding a thermosetting material), at least one second or thermoplastic extruder 46 (for extruding a thermoplastic material) and a section puller 48 for pulling the core member 16 through the extruders 44 and 46. It should be appreciated that the core unwinder 42, extruders 44 and 46, and section puller 48 are in a generally straight line to allow in-line extrusion. It should also be appreciated that additional equipment such as a roll former may be used depending on the particular application.

The method comprises the steps of forming a core member 16 to a predetermined configuration such as planar by unwinding the core member 16 as a continuous metal material from the core unwinder 42. The steps include extruding a first layer 17 of thermosettable material to the core member 16 with at least one first or thermoset extruder 44 along one side of the core member 16. The extruder 44 may include metal guides (not shown) for maintaining the core member 16 along the in-line direction. The dies (not shown) of the extruder 44 may be shaped to form the projection 32. It should be appreciated that the extruder 44 is heated to allow the thermosettable material to flow and be extruded.

The steps also include extruding a second layer 21 of thermoplastic material to the core member 16 with at least one second or thermoplastic extruder 46 along the other side of the core member 16. The extruder 46 is similar to the extruder 44 and is conventional in the art. The steps further include joining the first layer 17 and the second layer 21 together by applying an adhesive with an adhesive applicator to the first layer 17 prior to the second extruder 46. It should be appreciated that any suitable means may be used to join the first and second layers 17 and 21 together. However, when adhesive is used, the adhesive keeps moisture out of the joint 28 to prevent the core member 16 from oxidizing or rusting. The steps include moving the core member 16 and integral hybrid moulding and weatherstrip 10 through the extruders 44 and 46 with a section puller 48.

The present invention has been described in an illustrative manner, and it is to be understood that the terminology which has been used is intended to be in the nature of words of description rather than of limitation.

## Claims

1. An integral hybrid moulding and weatherstrip for attachment to a vehicle, comprising:
a core member;
a first layer secured directly to the core member;
and
a second layer secured directly to the core member;
wherein the first layer consists essentially of a thermoplastic material and the second layer consists essentially of a thermoset material, the layers being extruded sequentially onto the core member;
characterised in that there is provided adhesive means for affixing the first and second layers together; and
in that one of the layers has a groove along an interface therebetween, and the other of the layers has a projection extending into the groove for enhanced adhesion between the layers at the interface.

2. An integral hybrid moulding and weatherstrip as claimed in claim 1, wherein the core member comprises a metal material.

3. An integral hybrid moulding and weatherstrip as claimed in claim 1 or 2, wherein the adhesive means comprises a chemical adhesive.

4. A method of making an integral hybrid moulding and weatherstrip for attachment to a vehicle, using an apparatus including a core unwinder, a first extruder, a second extruder, and a section puller, the core unwinder, first and second extruders and section puller being in line, the method comprising the steps of:
forming a core member to a predetermined configuration by unwinding material for the core member from a core unwinder;
extruding a first layer of a material around part of the core member with a first extruder and simultaneously forming a projection extending from the first layer at an edge thereof;
applying an adhesive to the first layer;
extruding a second layer of a material around another part of the core member with a second extruder and simultaneously forming a groove in the second layer which accepts the projection of the first layer for enhanced adhesion between the layers at an interface therebetween; and
joining the first and second layers together, with the layers being extruded in-line, wherein one of the layers is formed of a thermoset material and the other of the layers is formed of a thermoplastic material.

5. A method according to claim 4, which includes the step of pulling the core member through the first and second extruders with a section puller.

6. A method according to claim 4 or 5, wherein the step of joining includes applying an adhesive to the first layer prior to extruding the second layer.

## Patentansprüche

1. Einstückiges Hybridgußstück und Dichtungsstreifen zur Befestigung an einem Fahrzeug mit:
einem Kernelement;
einer ersten, direkt an dem Kernelement befestigten Schicht; und
einer zweiten, direkt an dem Kernelement befestigten Schicht, wobei die erste Schicht im wesentlichen aus einem thermoplastischen Material besteht und wobei die zweite Schicht im wesentlichen aus einem wärmeaushärtenden Material besteht, wobei die Schichten nacheinander auf das Kernelement extrudiert werden;
dadurch gekennzeichnet, daß ein Haftmittel zur Befestigung der ersten und der zweiten Schichten aneinander vorgesehen ist; und
daß eine der Schichten eine Nut entlang einer zwischen ihnen liegenden Grenzfläche aufweist, und daß die andere der Schichten einen sich in die Nut erstreckenden Vorsprung aufweist, um die Haftung zwischen den Schichten an der Grenzfläche zu verbessern.

2. Einstückiges Hybrid-Gußteil und Dichtungsstreifen nach Anspruch 1, wobei das Kernelement ein metallisches Material aufweist.

3. Einstückiges Hybrid-Gußstück und Dichtungsstreifen nach Anspruch 1 oder 2, wobei das Haftmittel ein chemisches Haftmittel aufweist.

4. Verfahren zur Herstellung eines einstückigen Hybrid-Gußstücks und Dichtungsstreifens zur Befestigung an einem Fahrzeug, unter Verwendung einer Vorrichtung, die einen Kernentwinder, einen ersten Extruder, einen zweiten Extruder und eine Abschnittszieheinrichtung aufweist, wobei der Kernentwinder, die ersten und zweiten Extruder und die Abschnittszieheinrichtung in Reihe angeordnet sind, wobei das Verfahren folgende Schritte aufweist:
Formen eines Kernelements in eine festgelegte Gestalt durch Entwinden von Material für das Kernelement von einem Kernentwinder;
Extrudieren einer ersten Schicht aus einem Material um einen Teil des Kernelements mit einem ersten Extruder und gleichzeitiges Anformen eines Vorsprungs, der sich von der ersten Schicht an ihrer einen Kante erstreckt;
Aufbringen eines Haftstoffs auf die erste Schicht;
Extrudieren einer zweiten Schicht eines Materials um einen anderen Teil des Kernelements mit einem zweiten Extruder und gleichzeitiges Ausbilden einer Nut in der zweiten Schicht, welche den Vorsprung der ersten Schicht zur verbesserten Haftung zwischen den Schichten an einer zwischen diesen liegenden Grenzfläche annimmt; und
Verbinden der ersten und zweiten Schichten miteinander, wobei die Schichten in Reihe extrudiert sind, wobei eine der Schichten aus einem wärmeaushärtenden Material gebildet ist, und die andere Schicht aus einem thermoplastischen Material gebildet ist.

5. Verfahren nach Anspruch 4, das den Schritt des Ziehens des Kernelements durch die ersten und zweiten Extruder mit einer Abschnittszieheinrichtung umfaßt.

6. Verfahren nach Anspruch 4 oder 5, wobei der Schritt des Verbindens das Aufbringen eines Haftstoffs auf die erste Schicht vor dem Extrudieren der zweiten Schicht umfaßt.

## Revendications

1. Ensemble hybride de moulure et de joint profilé en une seule pièce destiné à être monté sur un véhicule, comprenant :
un élément d'âme,
une première couche fixée directement à l'élément d'âme, et
une seconde couche fixée directement à l'élément d'âme,
dans lequel la première couche est composée essentiellement d'un matériau thermoplastique et la seconde couche est composée essentiellement d'un matériau thermodurcissable, les couches étant extrudées de manière séquentielle sur l'élément d'âme,
caractérisé en ce qu'il est procuré des moyens d'adhésif pour fixer ensemble les première et seconde couches, et
en ce que l'une des couches comporte une rainure le long d'une interface entre celles-ci, et l'autre des couches comporte une saillie s'étendant dans la rainure pour une adhérence renforcée entre les couches au niveau de l'interface.

2. Ensemble hybride de moulure et de joint profilé en une seule pièce selon la revendication 1, dans lequel l'élément d'âme comprend un matériau métallique.

3. Ensemble hybride de moulure et de joint profilé en une seule pièce selon la revendication 1 ou 2, dans lequel le moyen d'adhésif comprend un adhésif chimique.

4. Procédé de fabrication d'un ensemble hybride de moulure et de joint profilé en une seule pièce destiné à être monté sur un véhicule, à l'aide d'un dispositif comprenant un dévidoir d'âme, une première extrudeuse, une seconde extrudeuse, et un dispositif à tirer les profilés, le dévidoir d'âme, les première et seconde extrudeuses et le dispositif à tirer les profilés étant en ligne, le procédé comprenant les étapes consistant à :
former un élément d'âme dans une configuration prédéterminée en dévidant du matériau destiné à former l'élément d'âme à partir d'un dévidoir d'âme,
extruder une première couche d'un matériau autour d'une partie de l'élément d'âme à l'aide d'une première extrudeuse et former simultanément une saillie s'étendant à partir de la première couche au niveau d'un bord de celle-ci,
appliquer un adhésif à la première couche,
extruder une seconde couche d'un matériau autour d'une autre partie de l'élément d'âme à l'aide d'une seconde extrudeuse et former simultanément dans la seconde couche une rainure qui reçoit la saillie de la première couche pour une adhérence renforcée entre les couches au niveau d'une interface entre celles-ci, et
réunir les première et seconde couches, les couches étant extrudées en ligne, dans lequel une première des couches est formée d'un matériau thermodurcissable et l'autre des couches est formée d'un matériau thermoplastique.

5. Procédé selon la revendication 4, qui comprend l'étape consistant à tirer l'élément d'âme à travers les première et seconde extrudeuses à l'aide d'un dispositif à tirer les profilés.

6. Procédé selon la revendication 4 ou 5, dans lequel l'étape de réunion comprend l'application d'un adhésif à la première couche avant d'extruder la seconde couche.
